# EUROPEAN PATENT SPECIFICATION

(11) **EP 2 330 268 B1**
(45) Date of publication and mention of the grant of the patent: **06.07.2016**
(21) Application number: 10015126.5
(22) Date of filing: 30.11.2010
(51) Int. Cl.: E05D 15/06, E05F 5/00, E05F 5/02

(54) **Sliding guide for doors provided with damper stop**
Führungsschiene für Türen mit Enddämpfung
Rail de guidage pour portes avec butée de fin de course

(30) Priority: 04.12.2009 IT MI20090399
(43) Date of publication of application: 08.06.2011
(73) Proprietor: Terno Scorrevoli S.r.l., 20039 Varedo, MI (IT)
(72) Inventor: Terno, Giovanni, 20814 Varedo (MB) (IT)
(74) Representative: Lecce, Giovanni

(56) References cited:
- EP-A2- 2 048 311
- EP-A2- 2 317 053
- WO-A1-2006/025149
- DE-U1- 20 218 927

## Description

This invention relates to a sliding guide for doors, provided with damper stop.

Namely, this invention relates to a sliding guide, especially suitable to be associated to sliding doors or panels employed for the separation of rooms, provided with a device damping, at least during closure, the travel of the sliding door or panel.

It is known that, in the rooms of houses, offices or else, sliding doors are frequently employed to divide two rooms between them, said doors replace hinged cantilevered doors, respect thereto show some advantages. In the first place, sliding doors do not require space for a cantilevered opening and therefore can be employed without the risk of interfering with structural parts during opening. An example thereof is provided by toilets obtained in small spaces, wherein a traditional inwards opening door would easily find the obstacle consisting in one or another sanitary ware; the problem is easily solved through the installation of a sliding door.

Moreover, sliding doors can also be housed, once opened, in spaces obtained close to the masonry and, thence, result concealed; in this way it is possible to achieve aesthetic results of high value, for example by opening a sliding double door between two rooms which therefore result communicating and return the feeling of a single large room.

The movement of the sliding doors thereof is performed through one or more small trolleys provided with rollers or bearings sliding along a suitable guide; the latter is arranged in correspondence of the upper edge of the door and usually fastened to a support constrained to the wall, whereas the trolley with rollers or bearings is directly applied to the door. The sliding guide of the trolley comprises, in the more perfected versions, a device suitable to damp the sliding door during closure, in a way to prevent the door from arriving at the end stop bumping and subject to dangerous recoils.

Currently known devices thereof comprise one or more oil or silicon pistons, fastened to a support inserted and stabilised in a section wherealong the rollers of the trolley slide, the latter, during closure of the door, directly or indirectly abuts on the exposed stem of said pistons which progressively slow down the travel thereof. However, this known solution shows some considerable drawbacks.

In the first place, the fluid contained in the pistons is severely affected by environmental conditions, and is directly influenced by the temperature wherein the furniture is placed. If the temperature is tendentially low for most part of the day, during typically cold periods with environmental heating at minimum levels, said fluid of the pistons tends to thicken and, therefore, makes the movements of the stem acting as damper slow and difficult. On the contrary, in presence of high temperatures such as summer temperatures that, in some areas, easily exceed 30° C, the fluid of the pistons becomes inconsistent and, because of its liquefaction, can cause leaks or losses from the enclosure wherein is contained. The above situation leads to drawbacks, such as the soiling of the sliding guides with a concurrent reduction of the damping effect.

Moreover, the guides for sliding doors thereof require an at least partial shielding of the parts employed for the movement, which remain in view protruding from the part overhanging the upper edge of the door thereof and thence producing a negative aesthetic result. This drawback is solved, in a typical embodiment, through the employment of a shielding band, or valance, fastened to the wall or to the supporting frame of the sliding door. This known solution solves the problem of concealing the components of the sliding system or parts thereof, but, in any case, it produces a complication both in construction and in installation of the door, leading anyway to an increase of the production costs. Also from an aesthetic point of view, the addition of a covering band in correspondence of the upper edge of the sliding door appears unsuitable.

WO 2006/025149 A1 discloses a sliding guide as recited in the preamble of claim 1. Additional sliding guides are disclosed in EP 2048 311 A2 and DE 202 18 927 U1.

The object of this invention is to obviate the drawbacks mentioned hereinabove.

Namely, object of this invention is to provide a sliding guide for doors wherein the device suitable to damp the travel, or damper stop, is constantly effective regardless of the temperature in the environment or the environmental conditions of the room wherein is installed.

Further object of the invention is to provide a sliding door for doors wherein the movement devices thereof are completely concealed and, thence, do not require the use of additional panelling or covering bands.

A further object of the invention is to provide the users with a sliding door suitable for ensuring high level of resistance and reliability over time, and also such as to be easily and inexpensively constructed.

These and yet other objects are achieved by the sliding guide for doors of the present invention according to the main claim.

The construction and functional features of the sliding guide for doors of this invention shall be better understood from the following detailed description, wherein reference is made to the annexed drawings showing a preferred and non-limiting embodiment thereof, and wherein:
figure 1 shows a schematic exploded view of the sliding guide for doors of this invention;
figure 2 schematically shows a lateral view of the sliding guide thereof;

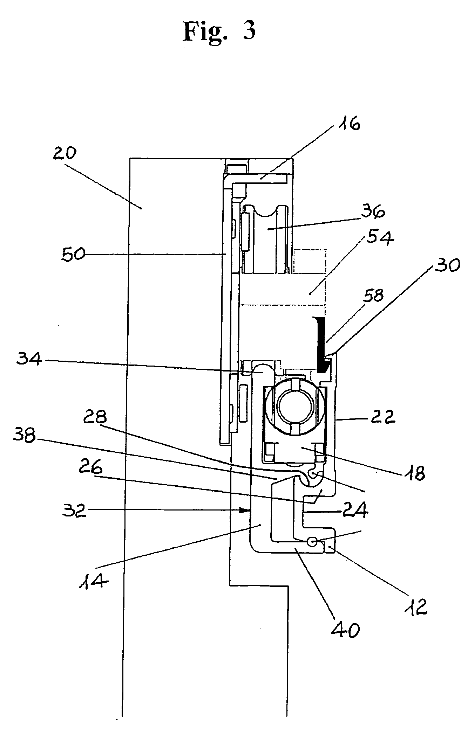

figure 3 schematically shows a partial longitudinal section of the sliding guide thereof fastened to a wall;
figure 4 schematically shows an exploded view of the sliding guide of the invention hereof applied to a door;
figure 5 schematically shows an exploded view of the trolley of the sliding guide thereof;
figures 6 and 7 schematically show, in lateral and plan view, the damping device of the sliding guide in the condition that happens when the door is open;
figures 8 and 9 schematically show, in lateral and plan view, the same damping device in the condition that happens when the door is closed;

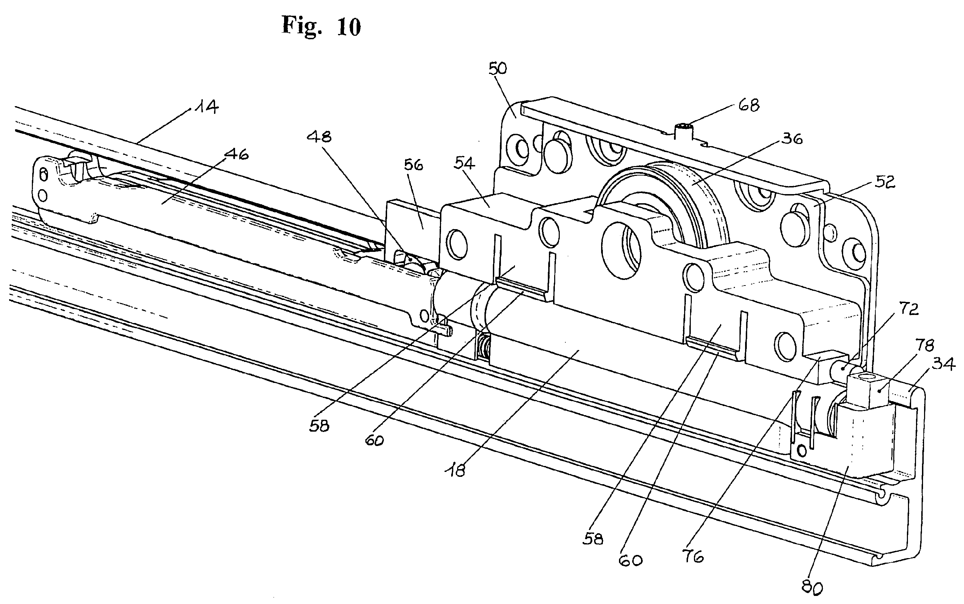

figure 10 schematically shows a perspective view of the sliding guide of the invention hereof highlighting an additional bumper element;
figure 11 schematically shows an exploded view of the trolley of the sliding guide of this invention provided with said bumper element or, alternatively, with a pin for a conventional clamp stop;
figure 12 schematically shows a perspective view of the sliding guide provided with said clamp stop.

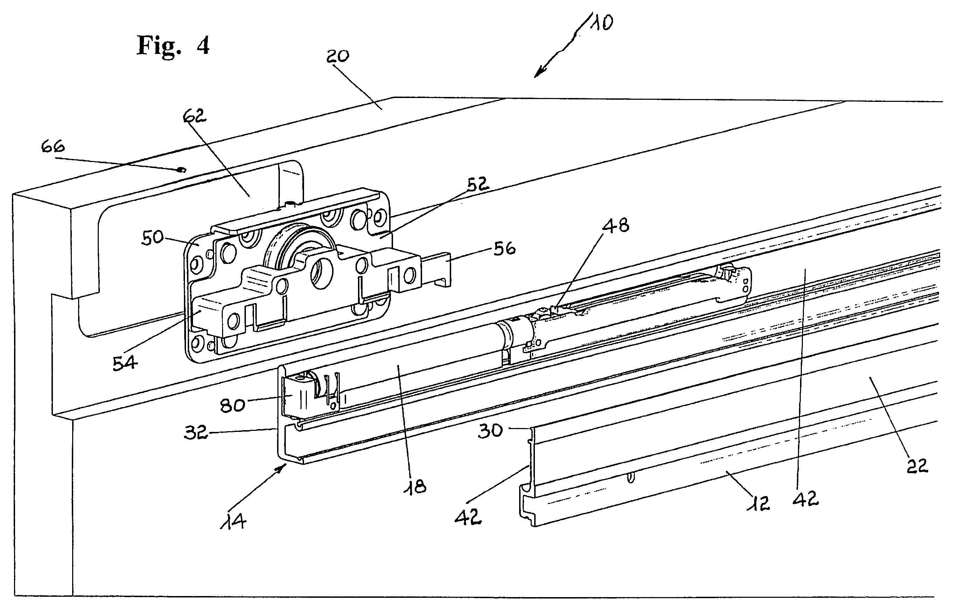

With initial reference to figures from 1 to 4, the sliding guide for doors provided of damper stop of this invention, globally indicated with 10 in figure 4, comprises basically a beam or first section 12, fastened to the wall by means of screws and blocks or in whichever other *per se* known way, a sliding track or second section 14, a trolley 16 and a damper 18 suitable to gradually slow down, at least during closure, a door 20 whereto said trolley 16 is fastened.

The first section or beam 12 defines a profile comprising two vertical walls 22, 24 arranged on different and reciprocally parallel planes, connected by a horizontal portion 26 forming in the upper part a concave seat 28.

At the upper end of the first section a hook appendix 30 is formed, longitudinally extending and facing towards the second section 14. The latter comprises a portion or vertical wall 32, having at the upper end a convex semicircular profile forming the seat or rolling track 34 of one or more bearings 36 of the trolley 16.

From the vertical wall 32 of the second section 14 develop with orthogonal pattern a first intermediate arm 38 and an extremity arm 40, both facing towards the beam 12.

The first intermediate arm 38 is provided, at the free end, with an integral projection with semicircular profile, coupling with the concave seat 28 of the beam or first section 12.

The extremity arm 40 of the second section aligns with the lower end of the first profile 12, the vertical wall 24 thereof horizontally extends in opposite direction from the door 20 and thence bends 90° downwards.

Between the inner fronts of the wall 22 of the beam 12 and the inner front of the first intermediate arm 38 and vertical wall 32 of the second section 14 is formed a seat 42 for the damper 18, advantageously of the air type. Said damper, of a *per se* known type, comprises a coil spring 44, an extension 46 wherein, during extension, the stem 18' extends and a pivoting grapnel 48 arranged at the front end of said stem.

The damper 18 is fastened in a known way, for example using one or more screws and the nuts thereof, in the seat comprised between the beam 12 and the second section 14 in correspondence with the extremity wherein the damping effect is required, which is typically performed on the doorstop during closure.

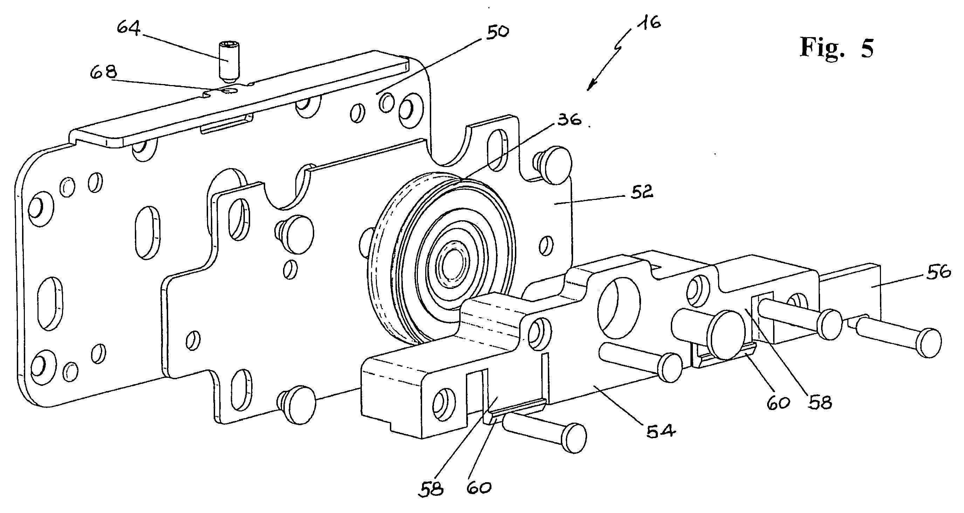

The sliding guide of this invention is associated to a running guide arranged at the base of the door, such guide, of any known type, is not described herein because it does not belong to the invention. The trolley 16, shown in detail in figure 5, further than in the remaining figures in the context of the guide 10, comprises a plate-like support 50 whereto is fastened through screws or equivalent means a support 52 presenting the bearing 36, said trolley 16, substantially *per se* known, is fixed and preferably at least in part recessed in the upper end of the inner front of the door 20, in a way that the bearing 36 rests with the concave rolling surface thereof on the track 34 formed at the upper end of the second section 14.

The support 52 carrying the bearing 36 is associated with a shaped body 54, comprising an activation device 56 of the damper 18.

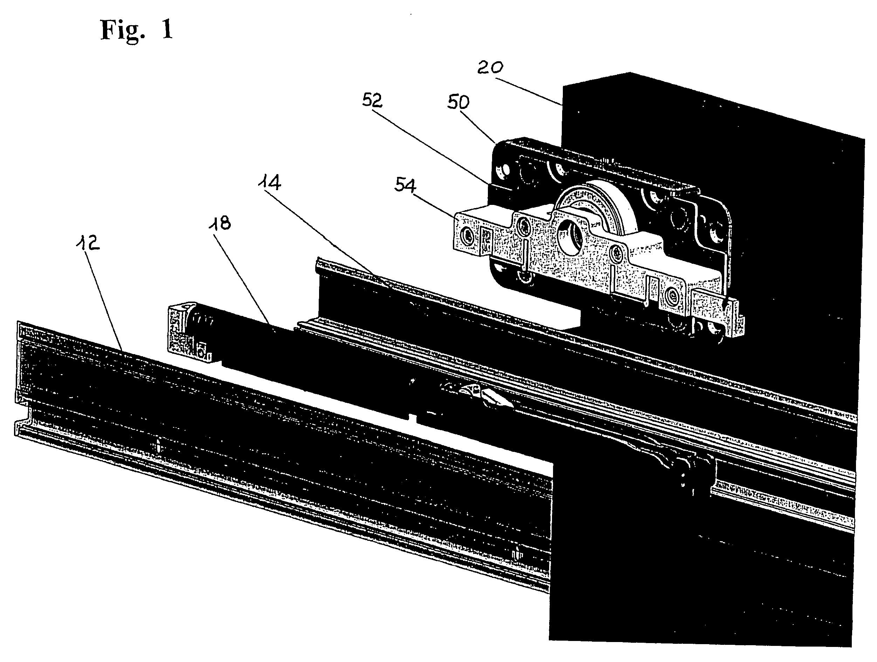

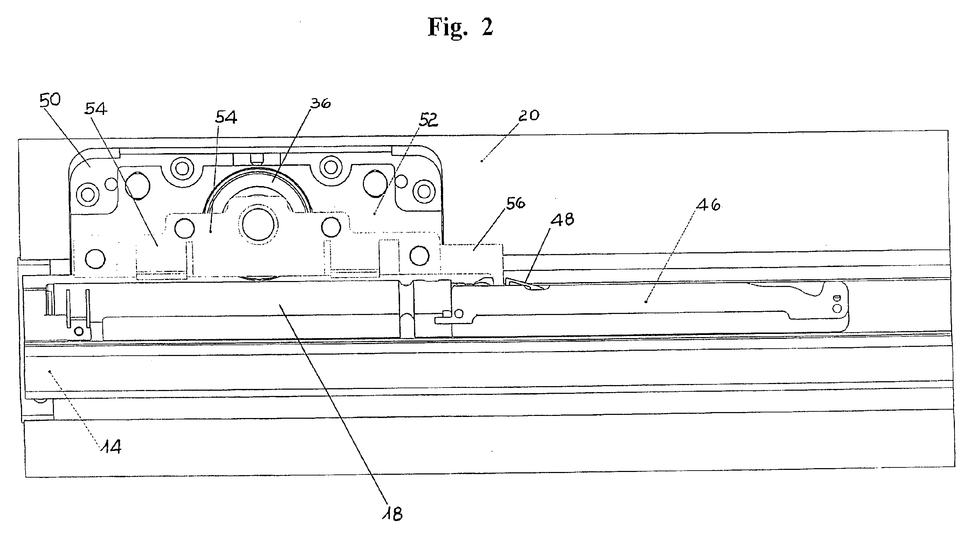

Said shaped body 54 is fastened to the support 52 frontally to the bearing 36, which is thence partially shielded, as shown in figures 1, 2 and 4, the activation device 56 consists in a shaped appendix laterally and in part downwards projecting from at least one of the ends of the shaped body 54 and is suitable to intercept the pivoting grapnel 48 of the damper 18.

On the front wall facing the damper 18 of the shaped body 54 is created at least one elastic tab 58, preferably at least two elastic tabs 58, reciprocally distanced and provided, at the lower end which substantially aligns with the base of said shaped body 54, with a hook or grapnel 60.

The latter is suitable to engage along the hook appendix 30 extending longitudinally respect to the beam or first section 12.

The tabs 58, engaging along the hook appendix 30 do not allow the trolley 16 to lift and thence prevent the activation device 56 from overriding the damper 18, also in the event that the door 20 is violently pushed during closure.

In the complex, the shaped body 54 advantageously performs the double function of actuator for the damper 18 and the anti-disengagement and anti-overriding function of the damper thereof by trolley 16.

The latter, as schematized in figure 5, is advantageously fixed to the door 20, in a recessed seat 62 thereof (figure 4), by means of a dowel 64, inserted through a hole 66 created on the upper head of said door and screwed in a seat 68; the latter obtained along a upper bending of the plate-like support.

Figures from 6 to 9 show in detail the damper 18 with extension 46 and coil spring 4: in the extension 46 is formed a shaped sliding slot 70, equally known, for the cursor 48.

Whereas the last part of the travel, amounting to few millimetres, of the trolley 16 is devoid of braking notwithstanding the intervention of damper 18, it is advantageously provided the positioning at the end of the travel of a rubber element or grommet 72, absorbing possible impacts of the cursor 48 on the damper thereof; at the same time, the grommet 72 dampens the noise produced by the trolley 16 that abuts with the travel end.

Said grommet 72, for example of cylindrical shape, is advantageously arranged in a seat 74 created on the shaped body 54, preferably on an appendix 76 of the body thereof opposing the activation device 56 and abuts with a projection 78 forming an upwards extension of the extremity block 80 of the damper 18.

In said block is inserted the screw or screws fixing, with relevant nuts, the damper 18 in the seat comprised between the beam 12 and the second section 14.

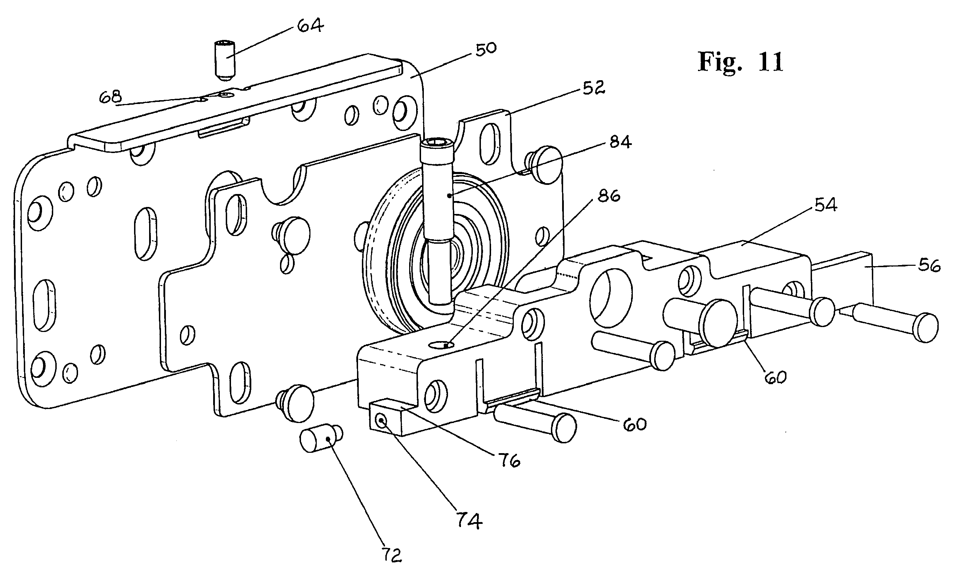

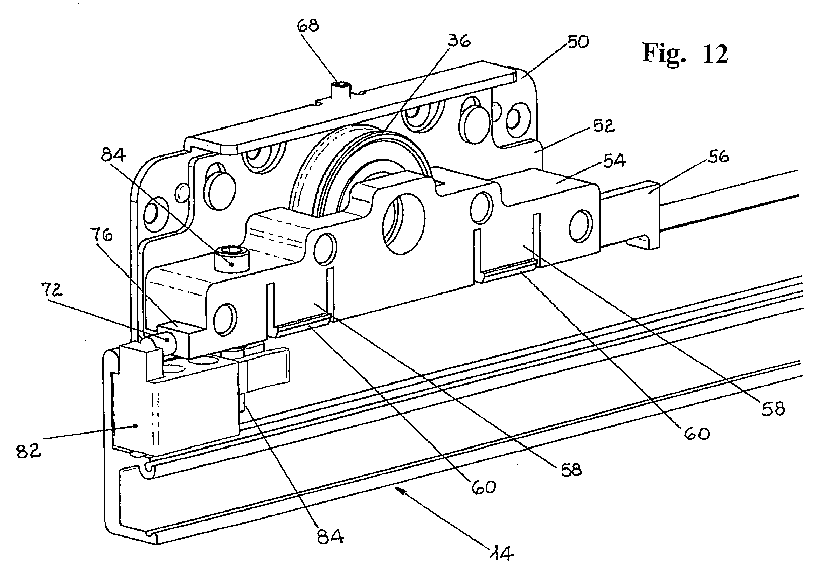

The trolley 16, as a whole, can be advantageously associated to a beam 12 presenting, in place of the damper stop comprising the damper 18, a traditional end-travel consisting in a clamp stop 82. This possible solution, schematized in figures 11 and 12, provides the displacement of said clamp stop 82 at one end of the second section 14 and the placement of a pin 84 in a hole 86 vertically oriented and obtained on the shaped body 54 in proximity to said appendix 76.

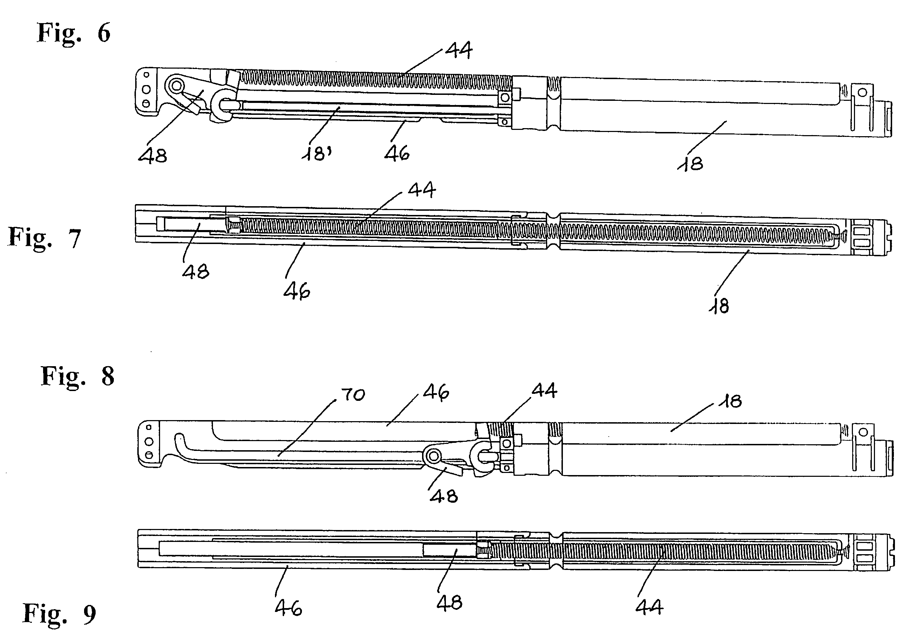

During the movement of the door 20, for example during closure thereof following a previous opening, the cursor 48 is abutted by the activation device 56, follows the slot 70 and presses the stem 18' of the air damper 18 which slows down the closing of said door. The starting situation of the closing stage of the door is schematically shown in figures 6 and 7.

The spring 44, fixed to the cursor 48 and previously extended upon opening of the door 20, progressively contracts and performs, in cooperation and in antithesis with the damper 18, the drawing without shocks and bumps of the door up to the natural end stop thereof. This stage is schematically shown in figures 8 and 9. Covering the last millimetres after the intervention of the damper 18 and reaching the travel-end, the trolley 16 abuts on the projection 78 with the grommet 72 of the shaped body 54, producing a smooth contact, free of significant noise.

As can be noticed, the advantages achieved by the invention are clear.

The sliding guide for doors provided with damper stop of the invention hereof is not influenced by the temperature of the environment wherein is installed, forasmuch the damping device is of the air type. Moreover, the sliding guide of the invention hereof does not leave in sight parts that could cause aesthetic flaws, thence no partial or total covers that could entail further costs are required forasmuch only a linear and clean strip is visible.

Even if the invention has been described hereinbefore with particular reference to an embodiment thereof made by way of a non-limiting example, several changes and variations shall clearly appear to a man skilled in the art in the light of the above description. This invention, therefore, is intended to include any changes and variations thereof falling within the spirit and the scope of protection of the following claims.

## Claims

1. A sliding guide (10) for doors (20), provided with damper stop, comprising a beam or first section (12) fastened to the wall and coupled to a second section (14), at least a trolley (16) constrained to the inner front of the door (20) and provided with one or more rollers or bearings (36) rolling mobile along a track (34) of the second section (14), said damper stop consisting in an air damper (18) inserted in a seat (42) defined by parts of said first and second section (12) and (14), **characterised in that** said first section or beam (12) comprises two vertical walls (22-24) arranged on different and reciprocally parallel planes, connected by a horizontal portion (26) forming in the upper part a concave seat (28), at the upper end of said beam (12) being formed a hook appendix (30), extending longitudinally and facing towards the second section (14), said second section (14) comprising a vertical wall (32) with a convex semi-circularly profiled upper end forming said track (34), orthogonally developing from said wall a first intermediate arm (38) and an extremity arm (40), both facing towards the beam (12), the seat (42) wherein the damper (18) is arranged being defined by the inner front of one of the vertical walls (22) of the first section (12), by the upper front of the first intermediate arm (38) and the inner front of the vertical wall (32) of the second section (14).

2. The sliding guide according claim 1, **characterised in that** said at least one trolley (16) comprises a plate-like support (50) whereto is constrained a support (52) presenting a bearing (36).

3. The sliding guide according to claim 2, **characterised in that** the support (52) is associated with a shaped body (54) comprising an activation device (56) interacting with a cursor (48) wherewith the damper (18) is provided.

4. The sliding guide according to claim 3, **characterised in that** the shaped body (54) comprises, on the front wall facing the damper (18), at least one elastic tab (58), provided at the lower end with a grapnel (60) engaging along the hook appendix (30) of the beam or first section (12).

5. The sliding guide according to claim 2, **characterised in that** the trolley (16) is fixed in a recessed seat (62) of the door (20) with a dowel (64) that crosses a hole (66) obtained along the upper head of the door thereof and screws in a seat (68) obtained along a upper bending of the plate-like support (50).

6. The sliding guide according to claim 4, **characterised in that** the movement of the door (20) activates a coil spring (44) wherewith the damper (18) is provided and leads the grapnel (60) connected to the stem (18') of the damper thereof to slide in a slot (70) obtained in the extension thereof (46).

7. The sliding guide according to claim 3 **characterised in that** the shaped body (54) comprises a seat (74), formed on an appendix (76) opposing the activation device (56), for the housing of a rubber element (72) abutting with a projection (78) forming an upwards extension of the extremity block (80) of the damper (18).

## Patentansprüche

1. Gleitführung (10) für Türen (20), die mit einem Dämpfungsanschlag versehen ist, die einen Balken oder ersten Abschnitt (12), der an der Wand befestigt und mit einem zweiten Abschnitt (14) verbunden ist, aufweist, wobei mindestens ein Rollschlitten (16), der an der inneren Vorderseite der Tür (20) befestigt ist und eine oder mehrere Walzen oder Lager (36) aufweist, beweglich an einer Schiene (34) des zweiten Abschnitts (14) entlangrollt, wobei der Dämpfungsanschlag als Luftdämpfer (18) ausgebildet ist, der in einem Sitz (42) eingesetzt ist, der durch Teile der ersten und zweiten Abschnitte (12) und (14) definiert ist,
**dadurch gekennzeichnet, dass**
der erste Abschnitt oder Balken (12) zwei vertikale Wände (22-24) umfasst, die auf unterschiedlichen und gegenseitig parallelen Ebenen angeordnet und durch einen horizontalen Abschnitt (26), der in seinem oberen Teil einen konkaven Sitz (28) aufweist, verbunden sind, wobei am oberen Ende des Balkens (12) ein Hakenfortsatz (30) ausgebildet ist, der sich in Längsrichtung erstreckt und in Richtung auf den zweiten Abschnitt (14) zeigt,
der zweite Abschnitt (14) eine vertikale Wand (32) aufweist, die ein konvexes oberes Ende mit halbkreisförmigem Profil aufweist, das die Schiene (34) bildet, der zweite Abschnitt ein erster zwischenliegender Arm (38) und ein Arm (40) am Ende aufweist, welche sich rechtwinklig zu der Wand erstrecken, welche beide in Richtung auf den Balken (12) zugewandt sind,
wobei der Sitz (42), in dem der Dämpfer (18) angeordnet ist, durch die innere Vorderseite einer der vertikalen Wände (22) des ersten Abschnitts (12), durch die obere Vorderseite des ersten zwischenliegenden Arms (38) und die innere Vorderseite der vertikalen Wand (32) des zweiten Abschnitts (14) definiert ist.

2. Gleitführung nach Anspruch 1, **dadurch gekennzeichnet, dass** der mindestens ein Rollschlitten (16) eine plattenförmige Stütze (50) umfasst, an der eine Stütze (52) befestigt ist, die ein Lager (36) aufweist.

3. Gleitführung nach Anspruch 2, **dadurch gekennzeichnet, dass** die Stütze (52) einem geformten Körper (54) zugeordnet ist, der eine Betätigungsvorrichtung (56) aufweist, die mit einem Schieber (48) zusammenwirkt, der mit dem Dämpfer (18) vorgesehen ist.

4. Gleitführung nach Anspruch 3, **dadurch gekennzeichnet, dass** der geformte Körper (54) auf der Vorderwand gegenüber von dem Dämpfer (18) mindestens eine elastische Lasche (58) aufweist, die an dem unteren Ende mit einem Haken (60) versehen ist, der längs des Hakenfortsatzes (30) des Balkens oder des ersten Abschnitts (12) eingreift.

5. Gleitführung nach Anspruch 2, **dadurch gekennzeichnet, dass** der Rollschlitten (16) in einem vertieften Sitz (62) der Tür (20) mittels eines Stiftes (64) befestigt ist, der durch ein Loch (66), das längs des Oberteils der Tür desselben vorgesehen ist, hindurchgeführt und in einem Sitz (68) eingeschraubt ist, der längs einer oberen Biegung der plattenförmigen Stütze (50) vorgesehen ist.

6. Gleitführung nach Anspruch 4, **dadurch gekennzeichnet, dass** die Bewegung der Tür (20) eine Spiralfeder (44) betätigt, die mit dem Dämpfer (18) vorgesehen ist, und den Haken (60), der mit dem Schaft (18') des Dämpfers desselben verbunden ist, so führt, dass er in einem Schlitz (70) gleitet, der in dessen Verlängerung (46) vorgesehen ist.

7. Gleitführung nach Anspruch 3, **dadurch gekennzeichnet, dass** der geformte Körper (54) einen Sitz (74) umfasst, der an einem Fortsatz (76) gegenüber von der Betätigungsvorrichtung (56) ausgebildet ist, um ein Gummielement (72) aufzunehmen, das an einem Vorsprung (78) anliegt, der eine Verlängerung nach oben des Endblocks (80) des Dämpfers (18) bildet.

## Revendications

1. Un guide coulissant (10) pour portes (20), pourvu d'une butée de fin de course, comprenant une poutre ou première section (12) assujettie à la paroi et couplée à une deuxième section (14), au moins un chariot (16) contraint sur l'avant intérieur de la porte (20) et pourvu d'un ou plusieurs rouleaux ou paliers (36) roulant de façon mobile le long d'un rail (34) de la deuxième section (14), ladite butée de fin de course consistant en un amortisseur à air (18) inséré dans un siège (42) défini par des parties de ladite première et deuxième section (12) et (14),
**caractérisé en ce que** ladite première section ou poutre (12) comprend deux parois verticales (22-24) agencées sur des plans différents et réciproquement parallèles,
raccordées par une portion horizontale (26) formant dans la partie supérieure un siège concave (28), un appendice formant crochet (30) étant formé au niveau de l'extrémité supérieure de ladite poutre (12), s'étendant longitudinalement et tourné vers la deuxième section (14), ladite deuxième section (14) comprenant une paroi verticale (32) avec une extrémité supérieure profilée de façon semi-circulaire convexe formant ledit rail (34), un premier bras intermédiaire (38) et un bras d'extrémité (40) se développant orthogonalement depuis ladite paroi, tous les deux tournés vers la poutre (12), le siège (42) dans lequel l'amortisseur (18) est agencé étant défini par l'avant intérieur de l'une des parois verticales (22) de la première section (12), par l'avant supérieur du premier bras intermédiaire (38) et l'avant intérieur de la paroi verticale (32) de la deuxième section (14).

2. Le guide coulissant selon la revendication 1, **caractérisé en ce que** ledit au moins un chariot (16) comprend un support analogue à une plaque (50) sur lequel est contraint un support (52) présentant un palier (36).

3. Le guide coulissant selon la revendication 2, **caractérisé en ce que** le support (52) est associé à un corps conformé (54) comprenant un dispositif d'actionnement (56) interagissant avec un curseur (48) dont l'amortisseur (18) est pourvu.

4. Le guide coulissant selon la revendication 3, **caractérisé en ce que** le corps conformé (54) comprend, sur la paroi avant face à l'amortisseur (18), au moins une languette élastique (58), pourvue au niveau de l'extrémité inférieure d'un grappin (60) se mettant en prise le long de l'appendice formant crochet (30) de la poutre ou première section (12).

5. Le guide coulissant selon la revendication 2, **caractérisé en ce que** le chariot (16) est fixé dans un siège renfoncé (62) de la porte (20) avec un goujon (64) qui croise un trou (66) obtenu le long de la tête supérieure de la porte de celui-ci et se visse dans un siège (68) obtenu le long d'une flexion supérieure du support analogue à une plaque (50).

6. Le guide coulissant selon la revendication 4, **caractérisé en ce que** le déplacement de la porte (20) actionne un ressort hélicoïdal (44) dont l'amortisseur (18) est pourvu et amène le grappin (60) raccordé à la tige (18') de l'amortisseur de celui-ci à coulisser dans une fente (70) obtenue dans l'extension de celui-ci (46).

7. Le guide coulissant selon la revendication 3, **caractérisé en ce que** le corps conformé (54) comprend un siège (74), formé sur un appendice (76) opposé au dispositif d'actionnement (56), pour le logement d'un élément en caoutchouc (72) s'appuyant sur une saillie (78) formant une extension vers le haut du bloc d'extrémité (80) de l'amortisseur (18).
